# EUROPEAN PATENT APPLICATION

(11) **EP 1 898 378 A2**
(43) Date of publication of application: **12.03.2008**
(21) Application number: 07115748.1
(22) Date of filing: 05.09.2007
(51) Int. Cl.: G08C 17/00

(54) **Information communication system, terminal apparatus, base apparatus, information communication method, information processing method, and computer program and recording medium**

(30) Priority: 05.09.2006 JP 2006240873
(71) Applicant: Sony Corporation, Minato-ku Tokyo (JP)
(72) Inventor: Nishikata, Natsuko, c/o Sony Corporation, Tokyo (JP); Suto, Kazunori, c/o Sony EMCS Corporation, Tokyo (JP); Katayama, Tamao, c/o Sony Corporation, Tokyo (JP)
(74) Representative: Thévenet, Jean-Bruno

(57) **Abstract**

An information communication system for performing bidirectional communication over a network (81, 82), includes: a terminal apparatus (40), a base apparatus (20), and a memory supplied in at least one of the base apparatus (20) and the terminal apparatus (40). A terminal control unit in the terminal apparatus (40) causes a transmission of a remote-control code information when the remote-control code information generated in the terminal apparatus (40) matches identification information corresponding to a selected external, or a base control unit in the base apparatus (20) supplies the remote-control code information to a remote-control transmission signal generation unit in the base apparatus (20) when the remote-control code information supplied from the terminal apparatus (40) matches identification information corresponding to a selected external device.

## Description

### BACKGROUND OF THE INVENTION

### 1. Field of the Invention

The present invention relates to an information communication system, a terminal apparatus, a base apparatus, an information communication method, an information processing method, and a computer program and a recording medium.

### 2. Description of Related Art

In a known information communication system, a broadcast program is recorded on a hard disk etc. in a base apparatus, and an audio/video signal of this recorded broadcast program is transmitted to a terminal apparatus over networks, such as the Internet, so that the broadcast program may be watched even in a distant position. Further, there also exists a case in which external devices, such as VCR (Video Cassette Recorder), DVD (Digital Video Disk) devices, etc., are connected to the base apparatus and the audio/video signal inputted from the external device into the base apparatus is transmitted to the terminal apparatus.

Thus, in the case of connecting the external device to the base apparatus, in order that the external device can be remotely controlled even from the terminal apparatus side, the invention of Japanese Unexamined Patent Application Publication No.2004-241925 is such that an operation signal sent from a remote control means in the form of a wireless signal is converted into digital data to be transmitted to the base apparatus then a wireless signal is generated according to the operation signal converted into the digital data and sent to this base apparatus and is transmitted to the external device.

### SUMMARY OF THE INVENTION

Incidentally, in the case where the external device which is operated with the same remote control signal, for example, a TV set, is connected to each of the base apparatus and the terminal apparatus, when remote control operation of adjusting the volume of the TV set connected to the terminal apparatus is carried out, and if the remote control signal transmitted from the remote control apparatus having performed this remote control operation is received by the terminal apparatus, then this received remote control signal is outputted from the remote-control signal transmission unit connected to the base apparatus and the volume of the TV set connected to the base apparatus is changed. Further, in the case where the TV set in which a standby state changes to an operating state automatically when channel change operation is performed is connected to the base apparatus, and if the channel change operation of the TV set connected to terminal apparatus is performed, then the TV set connected to the base apparatus may change to the operating state automatically.

Furthermore, when the remote control signal is received, if an erroneous remote-control received signal is generated due to the influence of a light etc., or the influence of a noise, etc., then there is a possibility that the erroneous remote control signal may be transmitted from the base apparatus and that an external device different from the external device to be operated may be remotely controlled.

Accordingly, the present invention allows the external device provided on the base apparatus side to be remotely and correctly controlled from the terminal apparatus side. That is, the terminal apparatus for receiving a remote control signal transmits to the base apparatus the remote-control code information obtained by receiving a remote control signal and performing a decoding process. Further, the base apparatus generates a remote-control transmission signal based on the received remote-control code information, and transmits the remote control signal based on the remote-control transmission signal to an external device. In the terminal apparatus when remote-control code information generated after receiving the remote control signal matches the identification information for identifying for a remote control signal used for an external device selected by a user, the remote-control transmission signal based on transmission of remote-control code information or remote-control code information is generated, to thereby prevent the remote control signal which is different from the remote control signal used for the selected external device, from being transmitted from the base apparatus.

The concept of the present invention is that in the case of performing bi-directional communication by connecting a base apparatus with a terminal apparatus over a network, when remote-control code information generated after receiving a remote control signal matches identification information corresponding to a selected external device in the terminal apparatus, the remote control signal generated based on the remote-control code information is transmitted from the base apparatus. The terminal apparatus in the information communication system in accordance with an embodiment of the present invention includes a remote-control signal receiving unit for receiving a remote control signal and generating a remote-control received signal, a remote-control received signal processing unit for decoding the remote-control received signal generated in the remote-control signal receiving unit, and a terminal control unit for causing a transmission of the remote-control code information to the base apparatus. The base apparatus includes a remote-control transmission signal generation unit for generating a remote-control transmission signal based on the remote-control code information, a remote-control signal transmission unit for transmitting a remote control signal based on the remote-control transmission signal generated in the remote-control transmission signal generation unit, and a base control unit for supplying the remote-control code information supplied from the terminal apparatus to the remote-control transmission signal generation unit. A memory, provided in at least one of the base apparatus and the terminal apparatus, stores identification information for identifying a remote control signal used for an external device different from the base apparatus and the terminal apparatus. In the terminal control unit, when the remote-control code information matches identification information stored in the memory corresponding to a selected external device, the remote-control code information is transmitted. Alternatively, in the base control unit, when the remote-control code information supplied from the terminal apparatus matches identification information stored in the memory corresponding to a selected external device, the remote-control code information is supplied to the remote-control transmission signal generation unit.

Preferably, the identification information for identifying a remote control signal used for the selected external device is information corresponding to a part of the remote-control code information generated after receiving the remote control signal. The identification information may be, for example, format information indicative of a format of the remote control signal and model information indicative of a model remotely controlled with the remote control signal.

Further, in the terminal apparatus, a first operation mode allowing transmission of the remote-control code information or a second operation mode disabling the transmission of the remote-control code information may be selected based on the received remote control signal.

Preferably, if the first operation mode is selected, the remote-control code information is transmitted to the base apparatus from the terminal apparatus and the remote control signal generated based on this remote-control code information is transmitted from the base apparatus only when the remote-control code information generated after receiving the remote control signal in the terminal apparatus matches the identification information corresponding to the selected external device, Alternatively, the remote-control code information is transmitted from the terminal apparatus to the base apparatus only when the transmitted remote-control code information matches the identification information corresponding to the selected external device. The remote control signal based on the remote-control code information is generated and the generated remote control signal is transmitted from the base apparatus. Furthermore, if the second operation mode is selected, the remote control of the external device supplied on the base apparatus side and by means of the remote control signal received by the terminal apparatus side is disabled.

According to one embodiment of the present invention, in the case of performing bi-directional communication by connecting the base apparatus with the terminal apparatus via the network, when the remote-control code information generated after receiving the remote control signal in the terminal apparatus matches the identification information corresponding to the selected external device, the remote control signal generated based on the remote-control code information is transmitted from the base apparatus.

Therefore, even if the remote-control code information different from the identification information on the external device selected by the user is generated in the terminal apparatus, the remote control signal based on the remote-control code information is not transmitted from the base apparatus. Consequently, the remote control of the external device is not performed when the remote control signal is not received correctly, or when the remote control signal corresponding to a device different from the selected external device is received. Further, the remote control of the external device provided on the base apparatus side is carried out correctly from the terminal apparatus side.

### BRIEF DESCRIPTION OF THE DRAWINGS

FIG. 1 is a diagram showing a structure of an information communication system.
FIG. 2 is a block diagram illustrating a structure of a base apparatus.
FIG. 3 is a block diagram illustrating a structure of a terminal apparatus.
FIG. 4 is a view showing a remote control through function settings screen.
FIG. 5 is a table showing identification information.
FIG. 6 is a flow chart showing an operation of the information communication system.
FIG. 7 is a flow chart showing another operation of the information communication system.

### DETAILED DESCRIPTION OF THE EMBODIMENTS

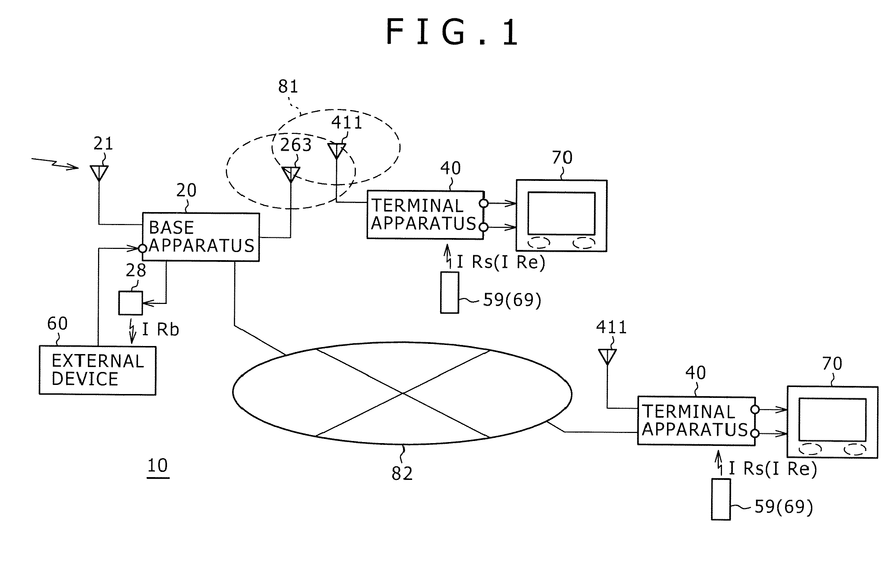

Hereafter, an embodiment of the present invention will be described with reference to the drawings. FIG. 1 shows a structure of an information communication system. The information communication system 10 includes a base apparatus 20 and a terminal apparatus 40. The base apparatus 20 and the terminal apparatus 40 are arranged to constitute a wireless network 81 by way of transmission and receiving of a wireless signal using transmission/receiving antennae 263 and 411. The bi-directional communication is carried out through the wireless network 81. Further, the base apparatus 20 and the terminal apparatus 40 enable a connection with a cable network 82, and the bi-directional communication is carried out through this cable network 82.

The base apparatus 20 is arranged such that a broadcast receiving antenna 21 receives a broadcast wave and an audio/video signal of a broadcast program is obtained. The audio/video signal is not always a signal containing both an image and a sound, but it may include either the image or the sound. Further, the base apparatus 20 enables a connection with an external device 60 that can output the audio/video signal, for example, such as VCR (Video Cassette Recorder) or a DVD (Digital Versatile Disc or Digital Video Disk) device.

This base apparatus 20 transmits the audio/video signal of the broadcast program or the audio/video signal, which is supplied from the external device 60, to the terminal apparatus 40 through the wireless network 81 or the cable network 82. Further, the base apparatus 20 is connected with a remote-control signal transmission unit 28 which transmits a remote control signal IRb.

The terminal apparatus 40 enables a connection with an image display apparatus and an audio output apparatus. FIG. 1 illustrates a case where a TV set 70 allowing image display and audio output is used as the image display apparatus and audio output apparatus. The terminal apparatus 40 supplies the TV set 70 with the audio/video signal supplied from the base apparatus 20 and causes the TV set 70 to present the image and the sound supplied from the base apparatus 20.

Further, the terminal apparatus 40 receives a remote control signal IRs transmitted from an attached remote control apparatus 59, and performs operation according to user's operation. Further, it generates an information signal based on the remote control signal IRs, and supplies the information signal to the base apparatus 20 over the wireless network 81 or the cable network 82, to thereby operate the base apparatus 20 according to the user's operation. Furthermore, the terminal apparatus 40 receives the remote control signal IRe corresponding to the external device transmitted from a remote control apparatus 69, and generates the remote-control code information. The generated remote-control code information is supplied to the base apparatus 20 through the wireless network 81 or the cable network 82, to thereby transmit the remote control signal IRb equal to the remote control signal IRe from the remote-control signal transmission unit 28 of the base apparatus 20.

Further, the terminal apparatus 40 has a software key function by using the TV set 70 which is an image display apparatus, and operation input display displayed on a screen of the TV set 70 is operated by means of the remote control apparatus 59, thus allowing not only a setup, switching of the operation, etc. of the terminal apparatus 40 but also a setup, switching of operation, etc. of the base apparatus 20.

By configuring the information communication system 10 in this way, even if the image display apparatus or the audio output apparatus is provided in a position away from the base apparatus 20, this image display apparatus or the audio output apparatus is connected to the terminal apparatus 40 and carries out the bi-directional communication through the wireless network 81 or the cable network 82, whereby the image or the sound of the broadcast program received by the base apparatus 20 or the image or the sound based on the audio/video signal supplied to the base apparatus 20 is presented by the image display apparatus or the audio output apparatus which are connected to the terminal apparatus 40. Further, since an image signal Vout and an audio signal Aout are outputted from the terminal apparatus 40, it is possible to use the existing image display apparatus or audio output apparatus, for example, existing TV set etc. Furthermore, there is no need to provide the terminal apparatus 40 with the display device for the image display or a speaker for audio output, so that the cost and size of the terminal apparatus 40 is reduced.

Furthermore, in the case of performing the bi-directional communication using the wireless network 81, since there is no need to connect the base apparatus 20 and the terminal apparatus 40 by means of a cable, the information communication system is constructed easily, for example, in a house etc. Further, in the case of performing the bi-directional communication using the cable network 82, even if the base apparatus 20 and the terminal apparatus 40 are provided in the distant positions where their wireless signals do not reach each other, the audio/video signal can be supplied from the base apparatus 20 to the terminal apparatus 40. Therefore, for example, assuming that the bi-directional communication between the base apparatus 20 and the terminal apparatus 40 is carried out by way of the Internet, then it is possible to watch and listen to a broadcast program etc. in a country for which the base apparatus 20 is provided by means of the TV set etc. connected to the terminal apparatus 40 provided for a different country. Although not shown, an access point may be used in the wireless network 81, a router etc. may be used in the cable network 82.

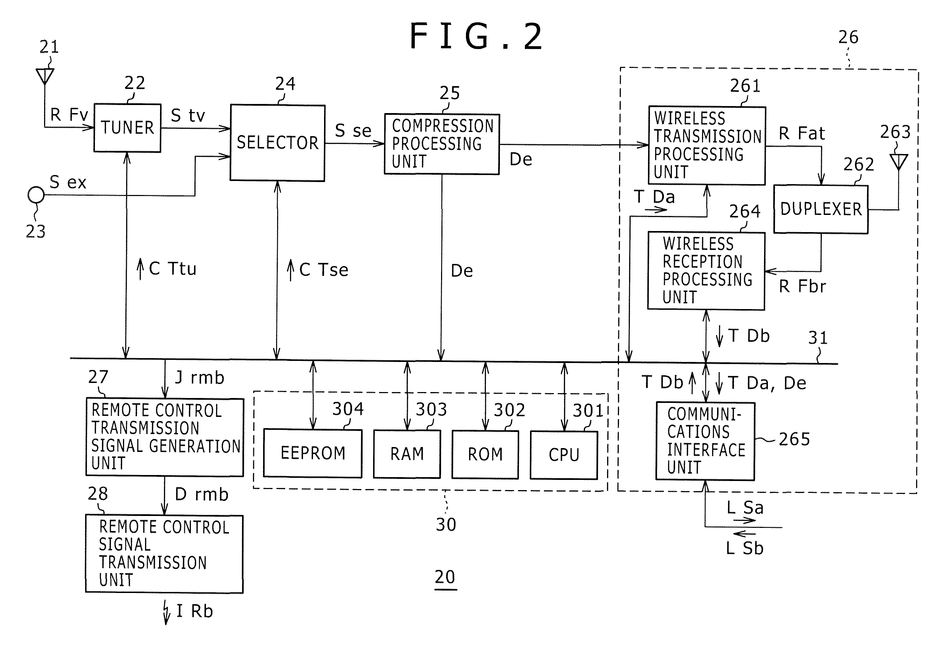

Next, the base apparatus 20 and the terminal apparatus 40 will be described. FIG. 2 shows a structure of the base apparatus 20. The broadcast receiving antenna 21 is an antenna for receiving the broadcast wave. A broadcast received signal RFtv obtained by receiving the broadcast wave by means of the broadcast receiving antenna 21 is supplied to a tuner 22.

The tuner 22 performs tuning operation based on a control signal CTtu supplied from a base control unit 30 to be set forth later, generates an audio/video signal Stv for a channel specified by the base control unit 30, and supplies it to a selector 24.

An external input terminal 23 is for connecting the external device 60 to the base apparatus 20. An audio/video signal Sex supplied from the external device 60 is supplied to the selector 24 through this external input terminal 23.

The selector 24 selects the audio/video signal Stv supplied from the tuner 22 or the audio/video signal Sex inputted through the external input terminal 23, based on a control signal CTse from the base control unit 30. Further, the selector 24 supplies the selected audio/video signal to a compression processing unit 25 as a selection audio/video signal Sse.

The compression processing unit 25 carries out a compression process for the supplied selection audio/video signal Sse by way of a predetermined compression technology. In this compression processing unit 25, the selection audio/video signal Sse is compressed by way of a compression technology, such as the MPEG system and a wavelet (Wavelet) system, for example. When the supplied selection audio/video signal Sse is an analog signal, the compression processing unit 25 converts the selection audio/video signal Sse into a digital signal, then performs the compression process. The compression processing unit 25 supplies a coded signal De obtained by performing the compression process to a wireless transmission processing unit 261 or a communications interface unit 265 of a communication unit 26.

The wireless transmission processing unit 261 converts the coded signal De or an information signal TDa (to be set forth later) supplied from the base control unit 30 into a transmission signal in compliance with a predetermined communications protocol. For example, in order to transmit the coded signal De so that neither an image nor a sound is disrupted, the wireless transmission processing unit 261 converts the coded signal De into a signal in compliance with UDP (User Datagram Protocol) which is a communications protocol of a connectionless system. Further, in order to ensure communications of the information signal TDa, the information signal TDa is converted into a signal in compliance with TCP (Transmission Control Protocol) which is a communication protocol of a connection system. The signal after this conversion is packetized and header information indicative of an address of the terminal apparatus 40 etc. is added. This packetized signal is subjected to an interleave process, a modulation process, an amplification process, etc., and converted into a transmission signal RFat in compliance with a protocol of IEEE (Institute Electrical and Electronics Engineers) 802.11 standard etc.

The transmission signal RFat generated in such a way is wirelessly transmitted through a common antenna device (duplexer) 262 and a transmission/receiving antenna 263. The duplexer 262 prevents the transmission signal and the received signal from interfering with each other.

The received signal RFbr obtained by receiving the wireless signal via the transmission/receiving antenna 263 is supplied to a wireless receiving processing unit 264 through the duplexer 262. The wireless receiving processing unit 264 performs the amplification process, a demodulation process, a de-interleave process, etc. for the received signal RFbr. Further, it takes out a packet signal destined for itself in which header information shows its own address, depacketizes the packet signal, and supplies the resulting information signal TDb to the base control unit 30.

The communications interface unit 265 converts the information signal TDa supplied from the coded signal De or the base control unit 30 into the signal in compliance with the predetermined communications protocol as described above. The converted signal is packetized, to which the header information indicative of the address of the terminal apparatus 40 etc., is added, and assembled into a frame to which a frame header is then added. And, it is transmitted to the cable network 82 as a communications signal LSa. Further, it selects the frame destined for itself from a communications signal LSb supplied through the cable network 82, and then depacketizes it. The resulting information signal TDb is supplied to the base control unit 30. In the communications interface unit 265, when a communication device (for example, a modem and a terminal adapter) for connecting with a public network is not provided independently of the base apparatus 20, this communication device is provided for the communications interface unit 265.

The remote-control transmission signal generation unit 27 generates a remote-control transmission signal Drmb, based on remote-control code information Jrmb supplied from the base control unit 30, and supplies the remote-control transmission signal generated to the remote-control signal transmission unit 28.

The remote-control signal transmission unit 28 transmits the remote control signal IRb based on the remote-control transmission signal Drmb supplied from the remote-control transmission signal generation unit 27. For example, the remote-control signal transmission unit 28 drives an infrared light emitting diode by the supplied remote-control transmission signal Drmb, and transmits the remote control signal IRb using infrared rays.

The base control unit 30 includes CPU (Central Processing Unit) 301, ROM (Read Only Memory) 302, RAM (Random Access Memory) 303, and EEPROM (Electrically Erasable Programmable Read Only Memory) 304. Further, the base control unit 30 is connected to each of the above-mentioned part through a bus 31.

ROM 302 records data etc. required for various types of programs and processes for operating the base apparatus 20. RAM 303 is mainly used as workspace for various types of processes, such as a process of temporarily storing and holding the data obtained when performing various types of processes by CPU 301. Since EEPROM 304 is a so-called non-volatile memory, rewritable information is held without loss, even if electric power supply is stopped. For example, it stores and holds information on the broadcast channel having been tuned in just before the main power supply for the base apparatus 20 is turned OFF. When the main power supply is turned ON again, a so-called last channel memory function to select the channel tuned in when the main power supply was turned OFF state last time is realized. Further, the information etc. indicative of a setup state of the base apparatus 20 is stored.

CPU 301 implements a computer program stored in ROM 302, and it controls each part so that the base apparatus 20 performs desired operations.

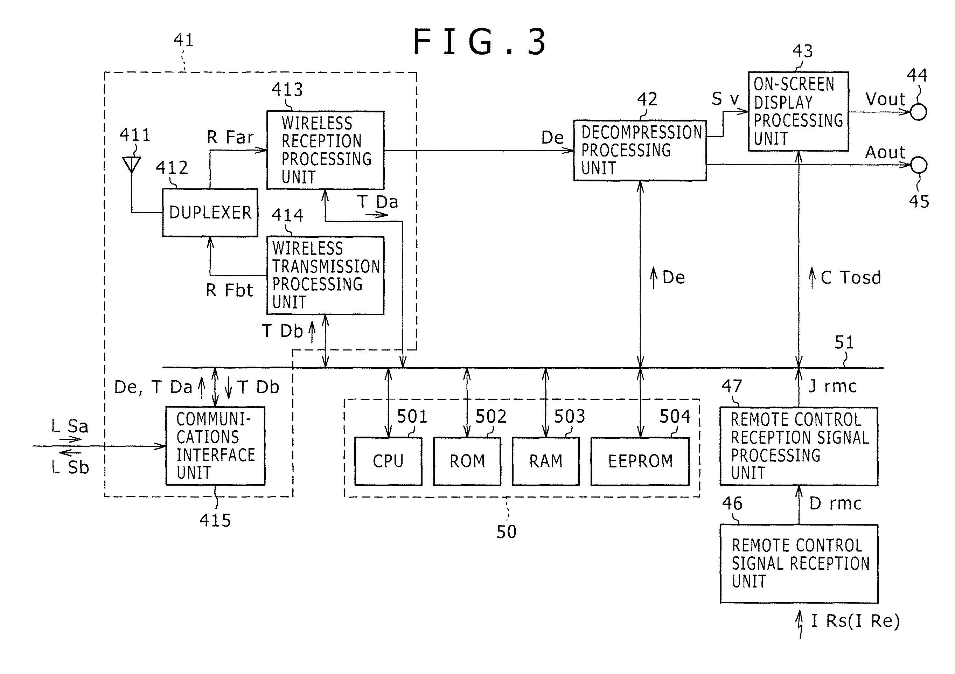

FIG. 3 shows a structure of the terminal apparatus 40. A received signal RFar obtained by receiving the wireless signal with the transmission/receiving antenna 411 of the communication unit 41 is supplied to a wireless receiving processing unit 413 through a duplexer 412.

The wireless receiving processing unit 413 performs the amplification process, the demodulation process, the de-interleave process, depacketization, etc. for the supplied received signal RFar similarly to the wireless receiving processing unit 264 of the communication unit 26 in the base apparatus 20. Here, when the coded signal De is obtained, the wireless receiving processing unit 413 supplies this coded signal De to the decompression processing unit 42. Further, when the information signal TDa is obtained, this information signal TDa is supplied to a terminal control unit 50.

The decompression processing unit 42 performs a separation process in which the coded signal De supplied from the wireless receiving processing unit 413 is separated into image and audio coded signals. Further, the decompression processing unit 42 performs the decompression process for the image coded signal, generates an image signal which is uncompressed, and supplies it to an on-screen display processing unit 43 as an image signal Sv. Furthermore, it carries out the decompression process for the audio coded signal, generates an audio signal which is uncompressed, and outputs it through an audio output terminal 45 as the audio signal Aout.

The on-screen display processing unit 43 processes the image signal according to a control signal CTosd supplied from the terminal control unit 50 so that the on-screen display, such as message display, menu screen display, or operation screen display, can be presented. In other words, the on-screen display processing unit 43 performs a so-called alpha blending process using display signals, such as a character or a picture and a sign of the on-screen display, and the image signal Sv supplied from the decompression processing unit 42. Thus, the image signal Vout of the image display on which the on-screen display is transparently superimposed is generated on an image based on the image signal Sv supplied from the decompression processing unit 42. Furthermore, the generated image signal Vout is outputted through the image output terminal 44. In the case of outputting an analog signal through the image output terminal 44 and the audio output terminal 45, digital/analog conversion is carried out with the decompression processing unit 42 or the on-screen display processing unit 43.

The wireless transmission processing unit 414 of the communication unit 41 generates a transmission signal RFbt in compliance with a predetermined communications protocol based on the information signal TDb supplied from the terminal control unit 50 as in the case of the wireless transmission processing unit 261 of the communication unit 26 in the base apparatus 20. Further, the generated transmission signal RFbt is wirelessly transmitted through the duplexer 412 and the transmission/receiving antenna 411.

The communications interface unit 415 performs depacketization etc., after choosing the frame destined for itself from the communications signal LSa supplied through the cable network 82. In the unit, when the information signal TDa is obtained, the information signal TDa is supplied to the base control unit 30. Further, when the coded signal De is obtained, the coded signal De is supplied to the decompression processing unit 42. Furthermore, the communications interface unit 415 converts the information signal TDb supplied from the terminal control unit 50 into the signal in compliance with the predetermined communications protocol as described above. The converted signal is packetized, to which the header information indicative of the address of the base apparatus 20 etc., is added and assembled into a frame to which a frame header is then added. And it is transmitted to the cable network 82 as the communications signal LSb. In the communications interface unit 415, when the communication device (for example, a modem and a terminal adopter) for connecting with the public network is not provided independently of the terminal apparatus 40, this communication device is provided for the communications interface unit 415.

A remote-control signal receiving unit 46 receives the remote control signal IRs (IRe) transmitted from the remote control apparatus 59 (69), and generates a remote-control received signal Drmc. For example, when the infrared remote control signal IRs (IRe) is transmitted from the remote control apparatus 59, the remote-control signal receiving unit 46 performs photoelectric conversion, and generates an electric signal according to the infrared remote control signal IRs (IRe) as a received signal. Further, after amplifying the received signal, the remote-control signal receiving unit 46 limits the amplitude and generates the remote-control received signal Drmc. When the remote-control received signal Drmc is generated in this way, the remote-control received signal Drmc of a desired signal level may be obtained, even if a supply direction of the remote control signal IRs (IRe) changes. The remote-control signal receiving unit 46 supplies the generated remote-control received signal Drmc to a remote-control received signal processing unit 47.

The remote-control received signal processing unit 47 decodes the remote-control received signal Drmc, and generates remote-control code information Jrmc. In the decoding process, based on the identification result of a subcarrier frequency of the remote control signal IRs (IRe), and the digital signal obtained by removing a subcarrier component from the remote-control received signal Drmc and binarizing it, the remote control signal IRs (IRe) identifies which manufacturer's format it is, and generates format information. Further, in this digital signal obtained by binarizing, it is arranged that a code signal indicating which category model the signal is for is model information and a code signal indicating what type of control function to be implemented the signal is for is functional information. Furthermore, the remote-control code information Jrmc includes the format information, the model information, and the functional information, and supplied to the terminal control unit 50.

The terminal control unit 50 includes CPU 501, ROM 502, RAM 503, and EEPROM 504. Further, the terminal control unit 50 is connected with each of the above-mentioned parts through the bus 51.

ROM 502 has recorded therein data etc. required for various types of programs and processes for operating the terminal apparatus 40. RAM 503 is mainly used as workspace for various types of processes, such as a process of temporarily storing and holding the data obtained when performing various types of processes by CPU 501. Since EEPROM 504 is a so-called non-volatile memory, rewritable information is held without loss, even if the electric power supply is stopped. The information etc. indicative of a setup state of the terminal apparatus 40 is stored in this EEPROM 504.

CPU 501 implements a computer program stored in ROM 502, and controls each part so that the terminal apparatus 40 may carry out desired operation.

As for the base apparatus 20 or the terminal apparatus 40, the computer program implemented by the base control unit 30 or the terminal control unit 50 may be stored in a recording medium, and the computer program recorded in this recording medium may be read out to be stored in EEPROM 304, 504 so that CPU 301, 501 may implement it. Further, the computer program may be stored in EEPROM 304, 504 through the wireless network 81 or the cable network 82 and implemented by CPU 301, 501. Further, not only the computer program but also the update data may be recorded in a storage medium, so that the data stored at the base control unit 30 and the terminal control unit 50 may be updated with the update data etc. recorded in this recording medium. Furthermore, it is also possible to update the data stored at the base control unit 30 and the terminal control unit 50 by supplying the update data etc. through the wireless network 81 or the cable network 82.

Next, operation of the information communication system will be described. Firstly, a case will be described where the operation input by the user is received with the terminal apparatus 40, and the base apparatus 20 is operated according to this operation input. The terminal control unit 50 of the terminal apparatus 40 identifies what type of user's operation is performed based on the remote-control code information Jrmc which is obtained by receiving the remote control signal IRs from the remote control apparatus 59 attached to the terminal apparatus 40, and generates the information signal TDb for controlling the base apparatus 20 based on this identification result. For example, when input switching operation is performed by the remote control apparatus 59, the terminal apparatus 40 generates a signal, as the information signal TDb, in which the signal supplied from the base apparatus 20 to the terminal apparatus 40 is switched to the audio/video signal of the broadcast program, or the audio/video signal from the external device 60.

Further, the terminal control unit 50 of the terminal apparatus 40 controls the on-screen display processing unit 43, and displays the operation input display on the screen of the TV set 70. Furthermore, based on the remote-control code information Jrmc obtained by receiving the remote control signal IRs while performing the operation input display, the terminal control unit 50 identifies what type of user's operation is performed, and generates the information signal TDb based on this identification result. For example, the terminal control unit 50 performs the channel display of the broadcast program which can be viewed and listened to as the operation input display. Based on the remote-control code information Jrmc obtained at this time, it identifies the channel which is selected by the user by operating the remote control apparatus 59. Furthermore, it generates the signal, as the information signal TDb, for causing the base apparatus 20 to tune in the identified channel.

Furthermore, if the terminal control unit 50 of the terminal apparatus 40 is arranged to carry out the bi-directional communication with the base apparatus 20 via the wireless network 81, it supplies the generated information signal TDb to the wireless transmission processing unit 414. Further, if it is arranged to carry out the bi-directional communication with the base apparatus 20 via the cable network 82, the generated information signal TDb is supplied to the communications interface unit 415.

The wireless transmission processing unit 414 converts the information signal TDb supplied from the terminal control unit 50 into the transmission signal RFbt to be supplied to the transmission/receiving antenna 411 through the duplexer 412, thereby transmitting the transmission signal RFbt as a wireless signal to the base apparatus 20.

The communications interface unit 415 converts the information signal TDb supplied from the terminal control unit 50 into the communications signal LSb, which is outputted to the cable network 82.

The base apparatus 20 supplies the wireless receiving processing unit 264 with the received signal RFbr obtained by receiving the wireless signal by means of the transmission/receiving antenna 263. The wireless receiving processing unit 264 performs the demodulation process etc. for the received signal RFbr and supplies the resulting information signal TDb to the base control unit 30. Further, the communications interface unit 265 takes out the information signal TDb destined for itself from the communications signal LSb, and supplies it to the base control unit 30.

The base control unit 30 controls the tuner 22 and the selector 24 based on the information signal TDb. For example, when the information signal TDb indicates the input switching operation, the signal supplied to the compression processing unit 25 is switched by generating the control signal CTse and supplying it to the selector 24. Further, when the information signal TDb indicates the channel, the broadcast program of the channel specified by the information signal TDb is tuned in with the tuner 22 by generating the control signal CTtu and supplying it to the tuner 22.

The base apparatus 20 supplies the audio/video signal Stv of the broadcast program broadcast through the channel specified by the terminal apparatus 40 as the selection audio/video signal Sse, to the compression processing unit 25 where it is compressed. Further, the selection audio/video signal Sse obtained by performing the selection process according to input switch instructions from the terminal apparatus 40 is supplied to the compression processing unit 25 where it is compressed. Here, when the bi-directional communication are performed through the wireless network 81, the coded signal De obtained in the compression processing unit 25 is supplied to the wireless transmission processing unit 261. Further, when the information signal TDa supplied to the terminal apparatus 40 is generated in the base control unit 30 of the base apparatus 20, this information signal TDa is supplied to the wireless transmission processing unit 261. When the bi-directional communication are performed through the cable network 82, the coded signal De obtained in the compression processing unit 25 and the information signal TDa generated in the base control unit 30 are supplied to the communications interface unit 265.

The wireless transmission processing unit 261 generates the transmission signal RFat based on the coded signal De or the information signal TDa, and supplies it to the transmission/receiving antenna 263 through the duplexer 262, to thereby transmit the transmission signal RFat to the terminal apparatus 40 as the wireless signal.

The communications interface unit 265 converts the coded signal De or the information signal TDa into the communications signal LSa of a predetermined protocol, and outputs it to the cable network 82.

The terminal apparatus 40 supplies the received signal RFar obtained by receiving the wireless signal with the transmission/receiving antenna 411 to the wireless receiving processing unit 413. When the signal obtained by performing the demodulation process etc. for the received signal RFar is the coded signal De, the wireless receiving processing unit 413 supplies this coded signal De to the decompression processing unit 42. Further, when the information signal TDa is obtained, this information signal TDa is supplied to the terminal control unit 50.

The communications interface unit 415 performs the depacketization process etc. for the communications signal LSa. When the resulting signal is the coded signal De, this coded signal De is supplied to the decompression processing unit 42. Further, when the information signal TDa is obtained, this information signal TDa is supplied to the terminal control unit 50.

The decompression processing unit 42 performs the decompression process for the coded signal De, supplies the resulting image signal Sv to the on-screen display processing unit 43, and outputs the image signal Vout in which the on-screen display is superimposed from the image output terminal 44. Further, the audio signal Aout after the decompression process is outputted from the audio output terminal 45.

Thus, even if the base apparatus 20 and the terminal apparatus 40 are provided in distant positions, the base apparatus 20 is remotely controlled via the terminal apparatus 40 according to the user's operation, whereby the image based on the image signal supplied from the external device 60 to the base apparatus 20 and the image signal of the broadcast program received by the base apparatus 20 can be displayed by the TV set 70 connected to the terminal apparatus 40. Further, the sound based on the audio signal of the broadcast program received by the base apparatus 20 or the audio signal supplied from the external device 60 to the base apparatus 20 can be outputted from the TV set 70 connected to the terminal apparatus 40.

This information communication system 10 is provided with function (hereafter referred to as "remote control through function") in which when the remote control apparatus is operated on the terminal apparatus 40 side, a remote control signal equal to the remote control signal transmitted from this remote control apparatus is transmitted from the remote-control signal transmission unit 28 provided for the base apparatus 20, so that the external device provided on the base apparatus 20 side may be remotely controlled with the remote control apparatus on the terminal apparatus 40 side.

When using the remote control through function, the remote control apparatus 69 which transmits the remote control signal corresponding to the external device is used on the terminal apparatus 40 side. Further, the external device provided on the base apparatus 20 side is not limited to a device which connects with the base apparatus 20 and supplies the audio/video signal, but it may only be a device that can switch the operation based on the remote control signal transmitted from the remote-control signal transmission unit 28, etc. For example, it may be a device, such as a lighting device, an air-conditioning device, a window shutter, etc. which can be remotely controlled.

In the case where the remote-control code information Jrmc obtained when the remote control signal IRe transmitted from remote control apparatus 69 is received is erroneous due to the influence of lighting, the influence of a noise, etc., if the remote control signal generated based on this erroneous remote-control code information Jrmc is transmitted as the remote control signal IRb from the remote-control signal transmission unit 28 of the base apparatus 20, then there is a possibility that a device different from the device which is remotely controlled by the remote control apparatus 69 may be erroneously subjected to the remote control. Therefore, in an effort to carry out the remote control of the external device 60 provided on the base apparatus 20 side correctly from the terminal apparatus 40 side, when the remote-control code information Jrmc generated after receiving the remote control signal with the terminal apparatus 40 matches the identification information Jes, pre-stored(stored in advance), in order to identify a remote control signal used for the external device 60, the process of transmitting the remote control signal IRb generated based on this matched remote-control code information from the base apparatus 20 is performed.

When using the remote control through function, the user is caused to select in advance which type of the external device 60 is provided on the base apparatus 20 side. In the selection of the external device 60, the remote control apparatus 59 attached to the terminal apparatus 40, for example is operated, and a remote control through function settings screen for selecting the external device 60 on the screen of the TV set 70 is displayed. Then, the user is caused to perform the selection operation of the external device 60 on this remote control through function settings screen.

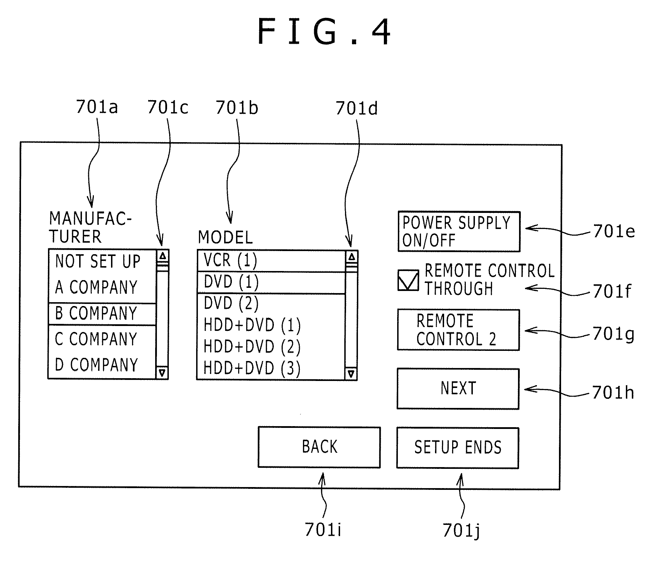

FIG. 4 illustrates the remote control through function settings screen. A manufacturer display area 701a which displays a manufacturer of the external device 60 by way of listing, and a model display area 701b which displays a model registered with respect to the manufacturer selected by the user by listing are provided on the remote control through function settings screen. It should be noted that, with respect to a display size of a manufacturer display area or a model display area, when there are many manufacturers and models which are displayed, scroll bar displays 701c and 701d are provided so that all manufacturers and models can be displayed by scrolling the displays. Further, on the remote control through function settings screen, operation key display is provided for checking to see whether the selected external device can be remotely and correctly controlled, for example, power supply ON/OFF key display 701e for indicating whether power supply operation of the selected external device operates correctly. Furthermore, remote control through function-setting display 701f is provided for choosing whether the remote control through function is enabled or disabled. Further, key display 701g for setting up a second external device, key display 701h for moving to a new setup screen, and key display 701i for returning the last screen are provided so that a plurality of external devices may be set up by switching the screens. Further, key display 701j for completing a setup is also provided on the remote control through function settings screen.

Based on the remote-control code information Jrmc obtained by receiving the remote control signal IRs, the terminal control unit 50 identifies what type of user's operation is performed in the remote control apparatus 59. Here, when the user's operation of specifying a manufacturer in the manufacturer display area 701a is performed, the model registered with respect to the specified manufacturer is indicated by list at the model display area 701b. Further, when the user's operation of selecting a model in the model display area 701b is carried out, the selected model in this selected manufacturer is the external device provided on the base apparatus 20 side. Furthermore, when a check mark is set up by way of the user's operation with respect to, for example, a check box provided for remote control through function-setting display 701f, the remote control through function is enabled. When the check mark is removed, the remote control through function is disabled.

Thus, if the first operation mode in which the remote control through function is enabled to transmit the remote-control code information from the terminal apparatus 40 to the base apparatus 20 and the second operation mode in which the remote control through function is disabled not to transmit the remote-control code information from the terminal apparatus 40 to the base apparatus 20 are provided to allow the selection on the remote control through function setting screen, then it is possible to remotely control the external device according to an intention of the user. In other words, when the external device is not remotely controlled, the second operation mode is selected to reliably stop the remote control of the external device. Further, the selection of the first operation mode allows the external device provided on the base apparatus 20 side to be remotely controlled from the terminal apparatus 40 side.

When carrying out the remote control for two external devices provided on the base apparatus 20 side, operation of selecting the key display 701g is performed. When the key display 701g is selected, a new setup screen similar to the above is displayed to set up the next external device. Further, when operation of selecting the key display 701j is performed, the setup screen is ended and a setting state of the external device is reflected to the operation.

Next, operation of the remote control through function will be described. As for the remote control through function, when it is determined that the remote control signal received by the terminal apparatus 40 is a signal used for the selected external device, a remote control signal equal to the remote control signal received by this terminal apparatus 40 is outputted from the remote-control signal transmission unit 28 of the base apparatus 20, to thereby remotely control only the selected external device.

In the determination of whether or not the remote control signal received by the terminal apparatus 40 is the signal used for selected external device, it is determined whether or not the remote-control code information Jrmc generated in the remote-control received signal processing unit 47 of the terminal apparatus 40 matches the identification information Jes for identifying a remote control signal used for the selected external device, as described above.

In the apparatus, the identification information corresponding to the model displayed on the remote control through function settings screen is stored in a memory. When a model is selected on the remote control through function settings screen, the identification information Jes corresponding to the selected model is used for the determination.

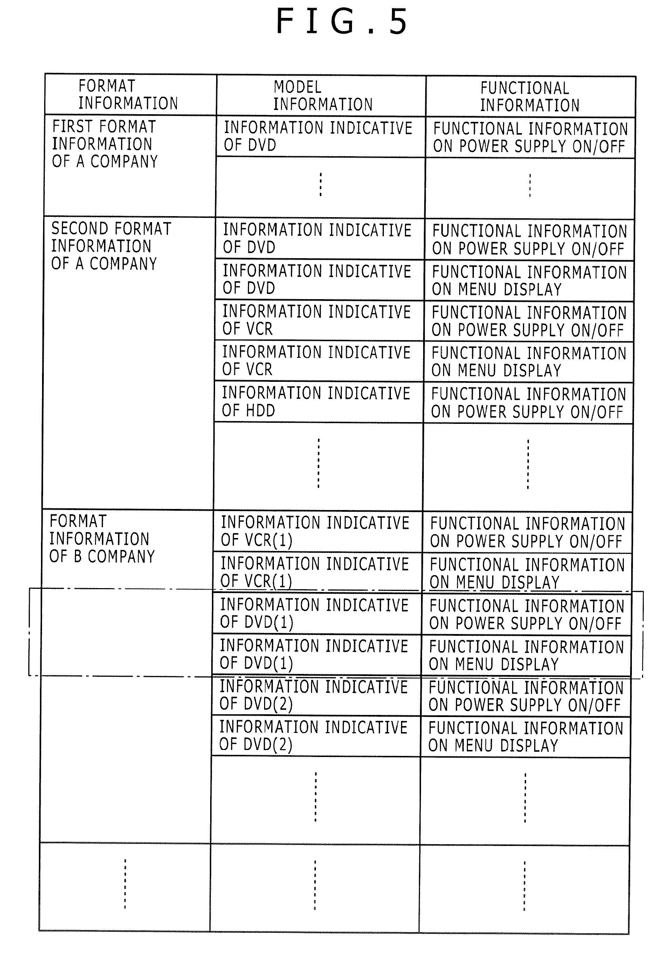

FIG. 5 illustrates the identification information stored in the memory. The identification information includes the format information for identifying which manufacturer's format the remote control signal is and the model information that is the code signal for indicating which category model the remote control signal is for. Further, it is possible to use the functional information that is the code signal for indicating a signal as to what type of control function is performed. Furthermore, the identification information on each of the external devices which can be selected on the remote control through function settings screen is stored beforehand in the memory. When the external device is selected, the identification information corresponding to the selected external device is set up as the identification information Jes used for the determination. In FIG. 5, the identification information enclosed with a chain dotted line indicates the identification information Jes used for the determination in the case of selecting the model of DVD(1) of B company and enabling the remote control through function, on the remote control through function settings screen shown in FIG. 4.

When the identification information includes the format information and the model information in this way, it makes to save memory area for storing the identification information, even if the number of the selectable models increases. Further, it is possible to easily determine whether or not the remote-control code information Jrmc and the identification information Jes are matched with each other. Furthermore, assuming that the determination is carried out including all functional information in the identification information, and if the registration of the functional information is erroneously omitted, it is difficult to correctly determine whether or not it is the remote control signal used for selected external device. Further, if the remote-control code information Jrmc is generated accidentally, it is often the case that not only the functional information but also the format information and the model information may be incorrect. Therefore, by constructing the identification information with the format information and the model information, it is easy to register the identification information and it is also possible to secure the accuracy of identifying whether or not it is the remote control signal used for selected external device.

In FIG. 5, although the functional information on power supply ON/OFF and the functional information on menu display are provided in the identification information, when a power supply key is operated on the remote control through function settings screen, it is possible to check to see whether or not the selected external device can be remotely controlled by using this identification information as the remote-control code information without receiving the remote control signal. Further, if the determination is carried out using this functional information, it is possible to check the functional information, when the power supply ON/OFF operation and the menu display operation are carried out in the remote control apparatus.

The determination of whether or not the remote-control code information Jrmc and the identification information Jes are matched with each other may be performed in the terminal control unit 50 of the terminal apparatus 40, or may be carried out in the base control unit 30 of the base apparatus 20. Further, when the determination of whether the remote-control code information Jrmc and the identification information Jes are matched with each other is carried out in the terminal control unit 50 of the terminal apparatus 40, it is possible to easily perform the determination, if the identification information on each external device is registered in EEPROM 504 beforehand, and the identification information Jes corresponding to the selected external device is used. Similarly, when the determination is carried out in the base control unit 30 of the base apparatus 20, the identification information on each external device is registered in EEPROM 304 beforehand, and then the identification information Jes corresponding to the selected external device is used, thus leading to easy determination.

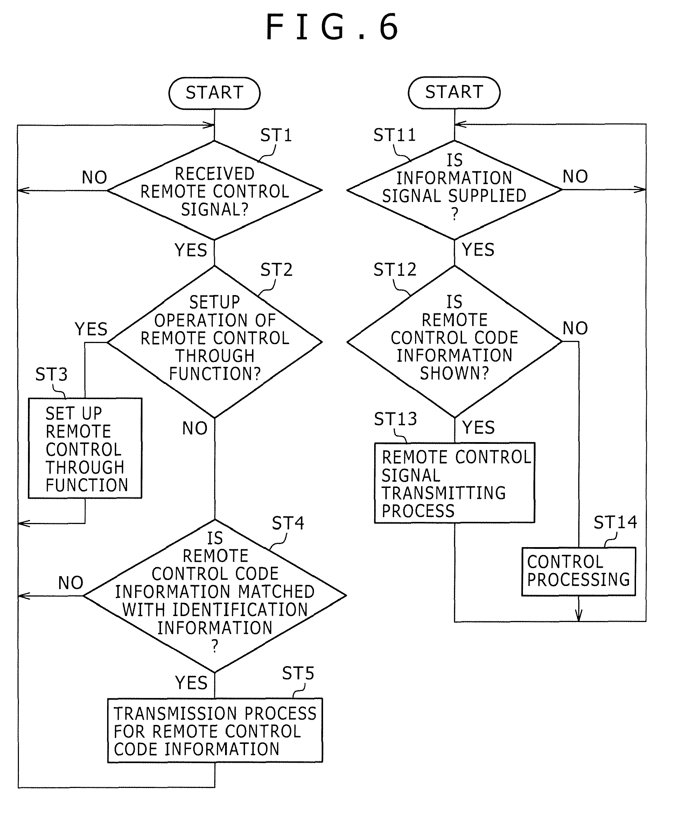

FIG. 6 is a flow chart showing an operation of the information communication system 10, and illustrates a case where it is determined whether or not the remote-control code information Jrmc and the identification information Jes are matched with each other in the terminal control unit 50 of the terminal apparatus 40.

The terminal control unit 50 of the terminal apparatus 40 identifies whether or not the remote control signal IRs (IRe) is received in step ST1. Here, the terminal control unit 50 returns to step ST1, if the remote control signal IRs (IRe) has not been received (i.e., if the remote-control code information Jrmc has not been supplied from the remote-control received signal processing unit 47). When the remote-control code information Jrmc is supplied, the process goes to to step ST2.

In step ST2, the terminal control unit 50 identifies whether the remote-control code information Jrmc is information about setup operation of the remote control through function. Here, as for the terminal control unit 50, the remote-control code information Jrmc is based on the remote control signal IRs. When the setup operation of the remote control through function is shown, the process goes to to step ST3. When the setup operation of the remote control through function is not shown, the process goes to to step ST4.

In step ST3, the terminal control unit 50 sets up the remote control through function. In other words, the terminal control unit 50 controls operation of the on-screen display processing unit 43, and displays the remote control through function settings screen as shown in FIG. 4 on the screen of the TV set 70. Further, based on the remote-control code information Jrmc supplied when displaying the remote control through function settings screen, the selection of the external device, the setup of the remote control through function as enabled/disabled, etc. are performed, and the process returns to step ST1.

In step ST4, the terminal control unit 50 determines whether the remote-control code information Jrmc and the identification information Jes are matched with each other. In other words, the terminal control unit 50 determines whether the remote-control code information Jrmc is matched with the identification information Jes for identifying a remote control signal used for the selected external device, when the remote control through function is enabled. Here, if the remote-control code information Jrmc is generated when receiving the remote control signal IRe used for the selected external device, the remote-control code information Jrmc and the identification information Jes are matched with each other, and the process goes to to step ST5. In other cases, the process returns to step ST1.

In step ST5, the terminal control unit 50 transmits performs the remote-control code information. Provided that the remote-control code information Jrmc matching the identification information Jes is identified the remote-control code information Jrmb, the terminal control unit 50 transmits the information signal TDb which indicates the remote-control code information Jrmb to the base apparatus 20 through the wireless network 81 or the cable network 82, and the process returns to step ST1.

The base control unit 30 of the base apparatus 20 identifies whether the information signal TDb is supplied through the wireless network 81 or the cable network 82 in step ST11. Here, the base control unit 30 returns the process to step ST11, when the information signal TDb is not supplied. When the information signal TDb is supplied, the process goes to to step ST12.

In step ST12, the base control unit 30 goes to the process to step ST13, when the supplied information signal TDb shows the remote-control code information. Further, when the supplied information signal TDb does not show the remote-control code information, the process goes to to step ST14.

The base control unit 30 performs a remote control signal transmitting process in step ST13. In other words, by supplying the remote-control code information Jrmb as shown by the information signal TDb supplied from the terminal apparatus 40 to the remote-control transmission signal generation unit 27, the base control unit 30 outputs the remote control signal IRb equal to the remote control signal IRe received by the remote-control signal receiving unit 46 of the terminal apparatus 40 from the remote-control signal transmission unit 28, and returns the process to step ST11.

In step ST14, a control process according to the information signal TDb is performed. For example, when the information signal TDb is a control signal which indicates channel switching and information switching, control operation according to this information signal TDb is performed, and the process returns to step ST11.

In this way, since only the remote-control code information Jrmb corresponding to the external device selected by enabling the remote control through function is supplied from the terminal apparatus 40 to the base apparatus 20, the remote control signal corresponding to an external device different from the selected external device is not transmitted from the base apparatus 20. Therefore, the remote control signal is prevented from being detected incorrectly and the external device different from the selected external device is prevented from being accidentally and remotely controlled by the terminal apparatus 40. Further, since only the remote-control code information Jrmb corresponding to the selected external device is supplied from the terminal apparatus 40 to the base apparatus 20, an unnecessary transmission process for the remote-control code information is not performed and it is possible to efficiently carry out the bi-directional communication between the base apparatus 20 and the terminal apparatus 40.

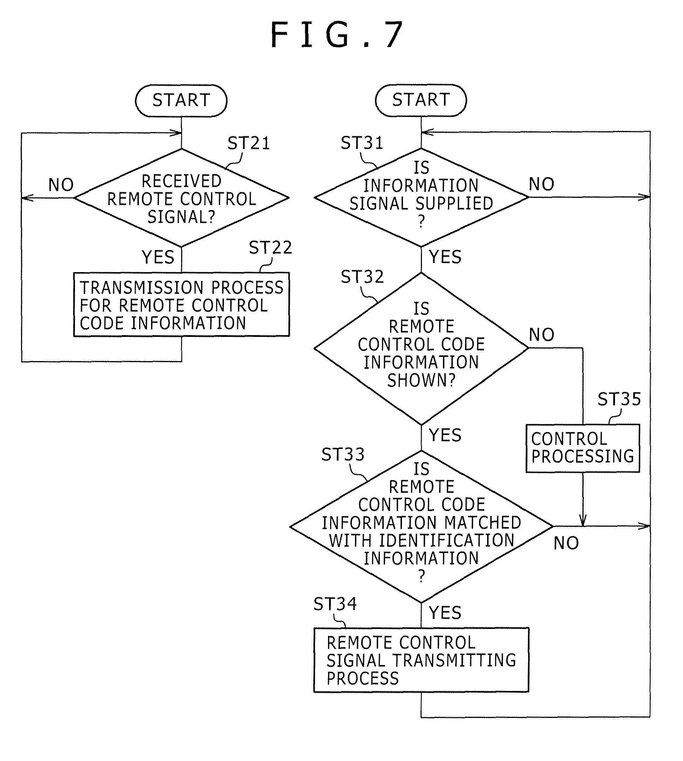

Next, where the determination of whether the remote-control code information Jrmc and the identification information Jes are matched with each other is carried out in the base control unit 30 of the base apparatus 20 is shown in FIG. 7 as another operation of the information communication system 10.

In step ST21, the terminal control unit 50 of the terminal apparatus 40 identifies whether the remote control signal IRs (IRe) is received. Here, the terminal control unit 50 returns the process to step ST21, when the remote control signal IRs (IRe) is not received (i.e., when the remote-control code information Jrmc is not supplied from the remote-control received signal processing unit 47). When the remote-control code information Jrmc is supplied, the process goes to to step ST22.

In step ST22, the terminal control unit 50 performs the transmission process for the remote-control code information. The terminal control unit 50 transmits the information signal TDb which indicates the remote-control code information Jrmc to the base apparatus 20 through the wireless network 81 or the cable network 82, and returns the process to step ST21.

In step ST31, the base control unit 30 of the base apparatus 20 identifies whether the information signal TDb is supplied through the wireless network 81 or the cable network 82. Here, the base control unit 30 returns the process to step ST31, when the information signal TDb is not supplied. When the information signal TDb is supplied, the process goes to to step ST32.

In step ST32, the base control unit 30 goes to the process to step ST33, when the supplied information signal TDb shows the remote-control code information. Further, when the supplied information signal TDb differs from the remote-control code information, the process goes to to step ST35.

In step ST33, the terminal control unit 50 determines whether or not the supplied remote-control code information Jrmc and the identification information Jes are matched with each other. In other words, when the remote control through function is enabled, the terminal control unit 50 determines whether or not the remote-control code information Jrmc supplied from the terminal apparatus 40 is matched with the identification information Jes for identifying a remote control signal used for the selected external device. Here, when the remote-control code information Jrmc and the identification information Jes are matched with each other, the process goes to to step ST34. In other cases, the process returns to step ST31.

The base apparatus 20 performs the setup of the remote control through function beforehand. For example, the information signal for displaying the remote control through function settings screen on the screen of the TV set 70 is transmitted from the base apparatus 20 to the terminal apparatus 40. When displaying the remote control through function settings screen, based on the remote-control code information supplied from the terminal apparatus 40 to the base apparatus 20, the base apparatus 20 performs the selection of external device, the enable/disable setup of the remote control through function, etc.

In step ST34, the base control unit 30 performs the remote control signal transmitting process. In other words, when the remote-control code information Jrmc supplied from the terminal apparatus 40 is matched with the identification information Jes, the base control unit 30 supplies this remote-control code information Jrmc to the remote-control transmission signal generation unit 27 as the remote-control code information Jrmb, whereby the remote control signal IRb equal to the remote control signal IRe received by the remote-control signal receiving unit 46 of the terminal apparatus 40 is outputted from the remote-control signal transmission unit 28. Then the process returns to step ST31.

In step ST35, the control process according to the information signal TDb is carried out. For example, when the information signal TDb is a control signal which indicates the channel switching and the information switching, the control operation according to this information signal TDb is performed, and the process returns to step ST31.

In this way, when the remote control through function is enabled, since only the remote control signal corresponding to the selected external device is transmitted from the remote-control signal transmission unit 28 of the base apparatus 20, an external device different from the selected external device is prevented from being remotely controlled accidentally. Further, since the base apparatus 20 determines whether or not the remote-control code information Jrmc and the identification information Jes are matched with each other, when a plurality of terminal apparatuses are already provided which transmit the generated remote-control code information Jrmc as it is, the external device provided on the base apparatus side can be remotely and correctly controlled from the terminal apparatus side by providing only a new base apparatus.

Although the structure is shown in which the bi-directional communication can be carried out by means of the wireless network 81 and the cable network 82 in the above preferred embodiments, the base apparatus 20 or the terminal apparatus 40 may be arranged to perform the bi-directional communication over either the wireless network 81 or the cable network 82.

It should be understood by those skilled in the art that various modifications, combinations, sub-combinations and alternations may occur depending on design requirements and other factors insofar as they are within the scope of the appended claims or the equivalents thereof.

## Claims

1. An information communication system for performing bi-directional communication by connecting a base apparatus (20) with a terminal apparatus (40) over a network, the information communication system, comprising:
the terminal apparatus (40) including:
a remote-control signal receiving unit (46) for receiving a remote control signal and generating a remote-control received signal;
a remote-control received signal processing unit (47) for decoding the remote-control received signal generated in the remote-control signal receiving unit (46); and
a terminal control unit (50) for causing a transmission of the remote-control code information to the base apparatus (20)
the base apparatus (20) including:
a remote-control transmission signal generation unit (27) for generating a remote-control transmission signal based on the remote-control code information; and
a remote-control signal transmission unit (28) for transmitting a remote control signal based on the remote-control transmission signal generated in the remote-control transmission signal generation unit (27); and
a base control unit (30) for supplying the remote-control code information supplied from the terminal apparatus (40) to the remote-control transmission signal generation unit (27); and
a memory, provided in at least one of the base apparatus (20) and the terminal apparatus (40), storing identification information for identifying a remote control signal used for an external device different from the base apparatus (20) and the terminal apparatus (40),
wherein the terminal control unit (50) causes a transmission of the remote-control code information when the remote code information generated in the remote-control signal receiving unit (46) matches identification information corresponding to a selected external device, or
the base control unit (30) supplies the remote-control code information to the remote-control transmission signal generation unit (27) when the remote-control code information supplied from the terminal apparatus matches identification information corresponding to a selected external device.

2. The information communication system according to claim 1, wherein the memory stores format information indicative of a format of the remote control signal and model information indicative of a model remotely controlled with the remote control signal as the identification information.

3. The information communication system according to claim 1, wherein the terminal control unit (50) of the terminal apparatus (40) is configured to enable a selection of either of first and second operation modes based on the remote-control code information generated in the remote-control received signal processing signal, the first operation mode enabling a transmission of the remote-control code information and the second operation mode disabling a transmission of the remote-control code information.

4. An information communication method for performing bi-directional communication by connecting a base apparatus (20) with a terminal apparatus (40) over a network, the information communication method comprising the steps of:
in the terminal apparatus (40),
receiving a remote control signal and generating a remote-control received signal;
generating a remote-control code information by decoding the remote-control received signal; and
transmitting the remote-control code information;
in the base apparatus (20),
receiving the remote-control code information transmitted;
generating a remote-control transmission signal; and
transmitting a remote control signal based on the remote-control transmission signal; and
wherein, in the transmission step of the terminal apparatus (40), the generated remote-control code information is transmitted when the generated remote-control code information matches identification information pre-stored for identifying a remote control signal used for a selected external device, or
in the receiving step of base apparatus (20), the remote-control transmission signal based on the remote-control code information is generated by the remote-control transmission signal generation step when the received remote-control code information matches the identification information.

5. A terminal apparatus, comprising:
a communication unit (41) for performing bi-directional communication over a network;
a remote-control signal receiving unit (46) for receiving a remote control signal and generating a remote-control received signal;
a remote-control received signal processing unit (47) for decoding the remote-control received signal generated by the remote-control signal receiving unit (46), and generating remote-control code information;
a memory storing identification information for identifying a remote control signal used for an external device;
a terminal control unit (50) for transmitting the remote-control code information from the communication unit (41), when the remote-control code information generated by the remote-control received signal processing unit (47) matches identification information, in the memory, corresponding to a selected external device.

6. The terminal apparatus according to claim 5, wherein the memory stores format information indicative of a format of the remote control signal and model information indicative of a model remotely controlled by the remote control signal as the identification information.

7. The terminal apparatus according to claim 5, wherein the terminal control unit (50) is configured to enable a selection of either of first and second operation modes based on the remote-control code information generated in the remote-control received signal processing unit (47), the first operation mode enabling a transmission of the remote-control code information and the second operation mode disabling a transmission of the remote-control code information.

8. An information communication method comprising:
receiving a remote control signal and generating a remote-control received signal;
generating remote-control code information by decoding the remote-control received signal; and
transmitting the remote-control code information, when the generated remote-control code information matches identification information pre-stored for identifying a remote control signal used for a selected external device.

9. A base apparatus, comprising:
a communication unit (26) for performing bi-directional communication over a network;
a remote-control transmission signal generation unit (27) for generating a remote-control transmission signal based on remote-control code information;
a remote-control signal transmission unit (28) for transmitting a remote control signal based on the remote-control transmission signal generated by the remote-control transmission signal generation unit (27);
a memory storing identification information for identifying a remote control signal used for an external device; and
a base control unit (30) for supplying the remote-control code information to the remote-control transmission signal generation unit (27), when the remote-control code information supplied through the communication unit (26) matches identification information, in the memory, corresponding to a selected external device.

10. The base apparatus according to claim 9, wherein the memory stores format information indicative of a format of the remote control signal and model information indicative of a model remotely controlled by the remote control signal as the identification information.

11. An information processing method comprising the steps of :
generating a remote-control transmission signal based on remote-control code information, when the remote-control code information received matches identification information pre-stored for identifying a remote control signal used for a selected external device; and
transmitting the remote control signal based on the generated remote-control transmission signal.

12. A computer program for causing a computer to implement, comprising the steps of:
a step of identifying whether remote-control code information obtained by receiving a remote control signal and decoded the received remote control signal matches identification information pre-stored for identifying a remote control signal used for a selected external device; and
a step of transmitting the remote-control code information when the remote-control code information matches the identification information.

13. A computer-readable recording medium having recorded therein a program for causing a computer to implement:
a step of identifying whether remote-control code information obtained by receiving a remote control signal and decoded the received remote control signal matches identification information pre-stored for identifying a remote control signal used for a selected external device; and
a step of transmitting the remote-control code information when the remote-control code information matches the identification information.

14. A computer program for causing a computer to implement:
a step of identifying whether remote-control code information received matches identification information pre-stored for identifying a remote control signal used for a selected external device; and
a step of generating and transmitting the remote control signal based on the remote-control code information when the remote-control code information matches the identification information.

15. A computer-readable recording medium having recorded therein a program for causing a computer to implement:
a step of identifying whether remote-control code information received matches identification information pre-stored for identifying a remote control signal used for a selected external device; and
a step of generating and transmitting the remote control signal based on the remote-control code information when the remote-control code information matches the identification information.
